# EUROPEAN PATENT APPLICATION

(11) **EP 4 379 865 A1**
(43) Date of publication of application: **05.06.2024**
(21) Application number: 22848592.6
(22) Date of filing: 27.07.2022
(51) Int. Cl.: H01M 4/62

(54) **TWO-ELEMENT LITHIUM SUPPLEMENTING ADDITIVE, PREPARATION METHOD THEREFOR, AND USE THEREOF**

(30) Priority: 30.07.2021 CN 202110879238
(71) Applicant: Shenzhen Innovazone Technology Co., Ltd., Shenzhen, Guangdong 518000 (CN)
(72) Inventor: WAN, Yuanxin, Shenzhen, Guangdong 518000 (CN); WANG, Yaxiong, Shenzhen, Guangdong 518000 (CN); KONG, Lingyong, Shenzhen, Guangdong 518000 (CN); PEI, Xianyinan, Shenzhen, Guangdong 518000 (CN); ZHONG, Zeqin, Shenzhen, Guangdong 518000 (CN)
(74) Representative: Antonucci, Alessandra
(86) International application number: PCT/CN2022/108323
(87) International publication number: WO 2023/005987

(57) **Abstract**

The present application discloses a two-element lithium supplementing additive, a preparation method therefor, and the use thereof. The two-element lithium supplementing additive of the present application comprises a carbon matrix and a two-element lithium supplementing material, which is dispersed in the carbon matrix. At least the carbon layer on the surface layer of the carbon matrix is a dense carbon layer. The molecular formula of the two-element lithium supplementing material is LiaXb, wherein 1 ≤ a ≤ 3, 1 ≤ b ≤ 3, and X is selected from any one of F, S, N, B, P, O and Se The two-element lithium supplementing material contained in the two-element lithium supplementing additive of the present application is rich in lithium, so as to maintain abundant lithium ions in a battery system and improve the first effect and overall electrochemical performance of a battery. By means of the contained carbon matrix, the two-element lithium supplementing material is dispersed in the carbon matrix to ensure the stability of the two-element lithium supplementing material and achieve a stable lithium supplementing effect. The preparation method therefor can ensure that the prepared two-element lithium supplementing additive has a stable structure and stable electrochemical performance, and the production cost is saved on. The two-element lithium supplementing additive is used in a positive electrode lithium supplementing additive, a positive electrode material, a positive electrode, and a lithium-ion battery.

## Description

This application claims the priority of the Chinese patent application submitted to the China Patent Office on July 30, 2021, with an application number 202110879238.6 and titled "BINARY LITHIUM-SUPPLEMENTING ADDITIVE, PREPARATION METHOD THEREFOR AND APPLICATION THEREOF ", the entire contents of which are incorporated by reference in this application.

### TECHNICAL FIELD

The present application relates to the technical field of lithium batteries, and more particularly to a binary lithium-supplementing additive and its preparation method and application.

### BACKGROUND

The oil energy crisis in the 1960s and 1970s forced people to look for new alternative energy sources. Lithium-ion batteries are considered to be one of the most promising energy sources due to their high operating voltage and energy density, relatively small self-discharge level, no memory effect, no pollution from heavy metal elements such as lead and cadmium, and long cycle life.

During the first charging process of a lithium-ion battery, a solid electrolyte interface (SEI) film is often formed on a surface of anode. This process consumes a large amount of Li⁺, which means that part of Li⁺ ions released from the cathode material are irreversibly consumed, making the corresponding battery cell has reduced reversible specific capacity. Anode materials, especially silicon-oxygen anode materials, will further consume Li⁺, making an initial Coulombic efficiency too low.

In order to improve the low Coulombic efficiency problem caused by the irreversible loss of the anode, in addition to the pre-lithiation of the anode material and the electrode sheet, supplementing the cathode with lithium can also meet the requirements of high energy density. The lithium-supplementing additive has a theoretical capacity as high as 867 mAh/g and a working voltage window consistent with that of the conventional lithium-ion battery, and basically does not participate in the electrochemical process in the later stage, thus being a lithium-supplementing additive with broad prospects.

Although the currently commonly used lithium-supplementing materials have relatively high lithium content and some lithium-supplementing materials have certain stability in the air, the electronic conductivity and ion conductivity of these lithium-supplementing materials are generally low, and pure lithium-supplementing materials, such as LiF, have electrochemical decomposition potentials as high as 6.1 V, which are much higher than a cut-off voltage (4.4 V) of the existing cathode materials, which makes it difficult to de-intercalate lithium during the charging process of the cathode, and the decomposition of LiF will produce toxic gas F₂. These deficiencies in lithium-supplementing components present certain challenges.

At present, there are public reports on cathode lithium-supplementing materials. For example, in a publication of the cathode lithium-supplementing material, lithium-supplementing components are loaded in a porous carbon material, but it is found in practical applications and researches that For such porous carbon material loaded with the lithium-supplementing components, the molten lithium metal is difficult to be uniformly loaded into pores of porous carbon, especially the internal pores and micropores thereof, and after the lithium in the larger pores reacts with the reaction gas, the obtained lithium-supplementing material has greatly large particles, the lithium ions have relatively long migration distance, large polarization, which makes it difficult to achieve close contact between lithium and the porous carbon skeleton.

In another publication of the cathode lithium-supplementing material, the elemental metal particles are dispersed in the structure of the lithium-supplementing material. However, it has been found through research that the lithium element and CoF₃ have relatively high viscosity under melting, and may be difficult to achieve uniform mixing by ordinary stirring, making that the uniformity and consistency of the material cannot be ensured.

In yet another publication of the cathode lithium-supplementing material, a lithium-supplementing material formed of Co-doped or Co-doped lithium ferrate and carbon materials and a sol-gel preparation method are involved. However, during the in-situ coating process of carbon source at high temperature in conventional sol-gel, it is easy for the carbon source to react with lithium source to form non-electrochemically active lithium carbonate, which affects the proportion of active hosts.

Therefore, research on the published cathode lithium-supplementing materials found that although the currently disclosed cathode lithium-supplementing materials can play a lithium supplement role and help improve the electronic conductivity of lithium-supplementing components, such as LiF particles, the existing published cathode lithium-supplementing materials still have deficiencies, which are specifically and prominently shown in the following aspects: lithium is difficult to be de-intercalated during the charging process of the cathode, the ion conductivity is low, the electronic conductivity is not ideal, the purity is not high, and a large amount of residual alkali remains on the surface layer; and the material lacks protection of a passivation layer at an interface thereof, and thus may be easily react with moisture in the environment to form LiOH, it is because of the low purity and the instability of the interface that the large amount of residual alkali remaining on the surface causes the storage stability and processing stability of existing cathode lithium-supplementing materials not ideal, the effect of lithium supplementation is not ideal, thus the capacity needs to be improved, and such materials are not prone to large scale production.

### SUMMARY OF INVENTION

### TECHNICAL PROBLEMS

The purpose of the present application is to overcome the above described problems of the related art, and to provide a binary lithium-supplementing additive, and preparation method and application thereof, to solve the technical problems that the storage stabilities and processing stabilities of the existing cathode lithium-supplementing additives are not ideal, and the purities thereof are not high.

### TECHNICAL SOLUTIONS TO PROBLEMS

### TECHNICAL SOLUTIONS

In order to achieve the purpose of the above application, in one aspect of the present application, a binary lithium-supplementing additive is provided. The binary lithium-supplementing additive of the present application comprises a carbon matrix and a binary lithium-supplementing material dispersed in the carbon matrix. At least a carbon layer on a surface of the carbon matrix is a dense carbon layer, and the binary lithium-supplementing material has a molecular formula of LiₐX_{b}, in which, 1 ≤ a ≤ 3, 1 ≤ b ≤ 3, and X is any one selected from F, S, N, B, P, O, and Se.

Further, at least the carbon layer on the surface of the carbon matrix has a porosity of 0.1% - 1%.

Further, a material of the carbon matrix comprises at least one of a hard carbon and a soft carbon.

Further, a weight content of the binary lithium-supplementing material accounts for 40 wt. % - 80 wt. % of the binary lithium-supplementing additive.

Further, the binary lithium-supplementing material comprises at least one of LiF, Li₂S, Li₃N, Li₃B, Li₂O, Li₃P, and Li₂Se.

Further, the binary lithium-supplementing additive has a particle size of 0.1 µm - 5 µm.

Further, the particle size of the binary lithium-supplementing additive satisfies: D10/D5 ≥ 0.1, and D90/D50 ≤ 3.

Further, the binary lithium-supplementing material has a particle shape, and the binary lithium-supplementing material and the carbon matrix form a pomegranate-like structure.

Further, the material of the carbon matrix is further doped with at least one conductive agent selected from carbon nanotubes, graphene, and carbon nanofibers.

Further, in the pomegranate-like structure, the particle size of the binary lithium-supplementing material is 20 nm - 100 nm.

Further, in a Raman spectrum of the binary lithium-supplementing additive, two scattering peaks are distributed at wavelengths of 1330 cm⁻¹ and 1580 cm⁻¹, respectively, intensities of the scattering peaks at the wavelengths of 1330 cm⁻¹ and 1580 cm⁻¹ are defined as I_{D} and I_{G}, respectively, and I_{D} and I_{G} satisfy: I_{D}/I_{G} < 5.0.

Further, an overall electronic conductivity of the binary lithium-supplementing additive is 10⁻⁵ S cm⁻¹- 10⁻² S cm⁻¹.

In another aspect of the present application, a preparation method of a binary lithium-supplementing additive is provided. The preparation method of the binary lithium-supplementing additive comprises steps of:
mixing a lithium source, a first X element source, and a first carbon source, and preparing a resulting mixture into a first precursor; in which, the lithium source and the first X element source are collected, respectively, according to a stoichiometric ratio of elements in a molecular formula of LiₐX_{b}, in which, a and b in LiₐX_{b} satisfy: 1 ≤ a ≤ 3, 1 ≤ b ≤ 3, and X is any one selected from F, S, N, B, P, O, and Se; and
subjecting, in a protective atmosphere, the first precursor to a first heat treatment, to enable the lithium source and the first X element source to react to generate LiₐX_{b}, and to enable the first carbon source to be cracked into carbon, whereby obtaining the binary lithium-supplementing additive.

Further, the lithium source comprises at least one of LiOH and Li₂SO₄.

Further, the first X element source comprises at least one of LiOH and Li₂SO₄.

Further, the first carbon source comprises at least one of resorcinol, a polyvinylpyrrolidone, a polyacrylonitrile, a polystyrene.

Further, in the step of mixing the lithium source, the first X element source, and the first carbon source, a conductive agent is further added to participate in the mixing step.

Further, a temperature of the first heat treatment is 650°C - 900°C.

Further, preparation of the precursor comprises steps of:
mixing the lithium source, the first X element source, the carbon source, and a solvent to form a mixture solution, granulating and drying the mixture solution to obtain the precursor in a particle shape.

Further, in case that LiₐX_{b} is Li₂O or Li₂S, the lithium source and/or the X element source comprises at least one of LiOH and Li₂SO₄.

In another aspect of the present application, another preparation method of a binary lithium-supplementing additive is provided. The preparation method of a binary lithium-supplementing additive comprises steps of:
preparing a binary lithium-supplementing material having a molecular formula of LiₐX_{b}; in which, a and b in LiₐX_{b} satisfy: 1 ≤ a ≤ 3, 1 ≤ b ≤ 3, and X is any one selected from F, S, N, B, P, O, and Se;
mixing the binary lithium-supplementing material with a second carbon source to form a second precursor; and
carbonizing the second precursor in a protective atmosphere to obtain the binary lithium-supplementing additive.

Further, a temperature of the carbonizing step is 500°C - 900°C; and/or
Further, the second carbon source comprises at least one of a phenolic resin, a polyvinylpyrrolidone, a polyacrylonitrile, and a polystyrene; and/or
Further, the step of preparing the binary lithium-supplementing material having the molecular formula of LiₐX_{b} comprises steps of:
   mixing a second X element source of the molecular formula LiₐX_{b} and a lithium element to form a precursor of the binary lithium-supplementing material; and
   subjecting the precursor of the binary lithium-supplementing material to a second heat treatment in a protective atmosphere, to perform a substitution reaction, whereby generating the binary lithium-supplementing material having the molecular formula of LiₐX_{b}.

Further, the second X element source comprises at least one of Fe₃O₄, NiO, Mn₃O₄, and Co₃O₄.

Further, a temperature of the second heat treatment is 190°C - 250°C.

In still another aspect of the present application, a cathode lithium-supplementing additive is provided. The cathode lithium-supplementing additive comprises: the binary lithium-supplementing additive according to embodiments of the present application, or the binary lithium-supplementing additive prepared according to the preparation method of the binary lithium-supplementing additive according to embodiments of the present application.

In still another aspect of the present application, a cathode material is provided. The cathode material of the present application comprises: the binary lithium-supplementing additive according to embodiments of the present application, or the binary lithium-supplementing additive prepared according to the preparation method of the binary lithium-supplementing additive according to embodiments of the present application, or the cathode lithium-supplementing additive according to embodiments of the present application.

In still another aspect of the present application, a cathode is provided. The cathode of the present application comprises: a current collector and a cathode active layer combined on a surface of the current collector. The cathode active layer comprises a cathode active material, a lithium-supplementing additive, a binder, and a conductive agent. The lithium-supplementing additive is the binary lithium-supplementing additive according to embodiments of the present application, or the binary lithium-supplementing additive prepared according to the preparation method of the binary lithium-supplementing additive according to embodiments of the present application, or the cathode lithium-supplementing additive according to embodiments of the present application.

In still another aspect of the present application, a lithium battery is provided. The lithium battery of the present application comprises a cathode, and the cathode is the cathode according to embodiments of the present application.

Compared with the prior art, the present application has the following technical effects:
The binary lithium-supplementing material contained in the binary lithium-supplementing additive in the present application is rich in lithium, therefore can provide abundant lithium, and can be used as a "sacrifice agent" during a first cycle of charging to release all the lithium ions at one time as much as possible, in order to replenish the irreversible lithium ions consumed in the formation of the SEI film on the anode, thereby maintaining the abundance of lithium ions in the battery system and improving the first charge-discharge efficiency and overall electrochemical performance of the battery. At least a carbon layer on a surface of the contained carbon matrix is a dense carbon layer, which increases the electronic contact between the binary lithium-supplementing material and the carbon matrix. The binary lithium-supplementing material is dispersed in the carbon matrix with such feature to ensure uniform dispersion and stability of the binary lithium-supplementing material, so as to achieve a stable lithium-supplementing effect. Moreover, the electron conduction environment of lithium-supplementing materials can be improved, which is beneficial to reduce polarization and promote the de-intercalation of lithium ions.

By using the preparation method of the binary lithium-supplementing additive of the present application, the binary lithium-supplementing material can be uniformly dispersed on the above carbon matrix, making the prepared binary lithium-supplementing additive have the above functions. Moreover, it can be effectively ensured that the prepared binary lithium-supplementing additive is rich in lithium and has high purity, and the prepared binary lithium-supplementing additive has high capacity and lithium-supplementing effect as well as excellent storage stability and processing stability. In addition, the preparation method of the binary lithium-supplementing additive can ensure that the prepared binary lithium-supplementing additive has stable structure and electrochemical performance, and has high efficiency and saves production costs.

Since the cathode lithium-supplementing additive and the cathode material of the present application contain the binary lithium-supplementing additive of the present application, during the charging and discharging process, the cathode lithium-supplementing additive and the cathode material can be used as a lithium source and as a "sacrifice agent" during the first cycle of charging to replenish the irreversible lithium ions consumed by the formation of the SEI film on the anode, so as to maintain the abundance of lithium ions in the battery system and improve the first charge-discharge efficiency and overall electrochemical performance of the battery.

The lithium-ion battery of the present application contains the binary lithium-supplementing additive of the present application, so the cathode cycle performance is good, and the internal resistance is low, thereby giving the lithium-ion battery of the present application excellent initial Coulombic efficiency, battery capacity and cycle performance, long service life, and stable chemical performance.

### BENEFICIAL EFFECT OF INVENTION

### DESCRIPTION OF THE DRAWINGS

### DESCRIPTION OF THE DRAWINGS

In order to more clearly illustrate the technical solutions in embodiments of the present application or in the related art, the drawings that need to be used in the description of the embodiments or the related art will be briefly described hereinbelow. Obviously, the accompanying drawings in the following description are only some embodiments of the present application. For those skilled in the art, other drawings can be obtained based on these drawings without creative work.
FIG. 1 is a transmission electron microscope (TEM) image of a binary lithium-supplementing additive in Example 1 of the present application;
FIG. 2 is a schematic flow chart of a preparation method of a binary lithium-supplementing additive according to the embodiments of the present application;
FIG. 3 is a schematic flow chart of another preparation method of a binary lithium-supplementing additive according to the embodiments of the present application; and
FIG. 4 is an XRD pattern of Example 3 of the present application.

### EMBODIMENTS OF INVENTION

### IMPLEMENTION MANNER OF INVENTION

In order to make the purpose, technical solution and advantages of the present application more clearer, the present application will be described in detail below in conjunction with the accompanying drawings and embodiments. It should be understood that the specific embodiments described here are only used to explain the present application, rather than limit the present application.

In this application, the term "and/or", which describes the relationship between related objects, means that there can be three relationships, for example, A and/or B, which can represent circumstances that A exists alone, A and B exist at the same time, and B exists alone, where A and B can be singular or plural. The character "/" generally indicates that the associated objects are in an "or" relationship.

In this application, "at least one" means one or more, and "a plurality of" means two or more. "At least one item below" or similar expressions refer to any combination of these items, including any combination of single item or plural items. For example, "at least one of a, b, or c" can mean: a, b, c, a-b (i.e., a and b), a-c, b-c, or a-b-c, where a, b, and c can be singular or plural respectively.

It should be understood that, in various embodiments of the present application, the numbers of the above-mentioned processes do not imply the sequence of execution, some or all of the steps may be executed in parallel or sequentially, and the execution sequence of each process should be based on its functions and determined by the internal logic, and should not constitute any limitation on the implementation process of the embodiments of the present application.

The terms used in the embodiments of the present application are merely for the purpose of describing specific embodiments, and are not intended to limit the present application. Unless clearly dictated otherwise, the singular forms "a", "the" and "said" as used in the embodiments of this application and the appended claims intended to include the plural forms as well.

The weight of the relevant compositions mentioned in the examples of this application can not only refer to the specific content of each composition, but also represent the proportional relationship between the weights of the compositions. It is within the scope disclosed in the embodiments of the present application that the content of the compositions is proportionally scaled up or down. Specifically, the mass described in the description of the embodiments of the present application may be a mass unit known in the chemical field, such as µg, mg, g, and kg.

The terms "first" and "second" are merely used for descriptive purposes to distinguish objects such as substances from each other, and cannot be understood as indicating or implying relative importance or implying the number of indicated technical features. For example, without departing from the scope of the embodiments of the present application, "the first" may also be referred to as "the second", and similarly, "the second" may also be referred to as "the first". Thus, a feature defined as "first" or "second" may expressly or implicitly include one or more of the features.

In one aspect, embodiments of the present application provide a binary lithium-supplementing additive. The binary lithium-supplementing additive in embodiments of the present application comprises a carbon matrix and a binary lithium-supplementing material dispersed in the carbon matrix.

The binary lithium-supplementing material contained in the binary lithium-supplementing additive in embodiments of the present application is dispersed in the carbon matrix. In this way, in the binary lithium-supplementing additive in embodiments of the present application, the contained binary lithium-supplementing material can provide abundant lithium, and therefore can be used as a "sacrifice agent" during a first cycle of charging to release all the lithium ions at one time as much as possible, in order to replenish the irreversible lithium ions consumed in the formation of the SEI film on the anode, thereby maintaining the abundance of lithium ions in the battery system and improving the first charge-discharge efficiency and overall electrochemical performance of the battery. At least a carbon layer on a surface of the contained carbon matrix is a dense carbon layer, which increases the electronic contact between the binary lithium-supplementing material and the carbon matrix, and improves the electronic conductivity of the binary lithium-supplementing additive. The overall electronic conductivity of the additives is 10⁻⁵ S cm⁻¹- 10⁻² S cm⁻¹, optionally 10⁻³ S cm⁻¹ - 10⁻² S cm⁻¹. In order to simultaneously isolate the binary lithium-supplementing material from the air and improve the stability of the binary lithium-supplementing material, the binary lithium-supplementing material is dispersed in the carbon matrix with such feature to ensure uniform dispersion and stability of the binary lithium-supplementing material, so as to achieve a stable lithium-supplementing effect. Moreover, the electron conduction environment of lithium-supplementing materials can be improved, which is beneficial to reduce polarization and promote the de-intercalation of lithium ions.

The above dense carbon layer means that the carbon matrix has low porosity and relatively high density. In examples, it is measured that the porosity of the dense carbon matrix in embodiments of the present application is 0.1% - 1%, and may specifically be 0.1%, 0.3%, 0.5%, 0.7%, 1%, and other typical but non-limiting porosities. The carbon matrix having at least the surface carbon layer being a dense carbon layer has a density of 1.6 g cm⁻³ - 2.2 g cm⁻³, and may specifically be 1.6 g cm⁻³, 1.7 g cm⁻³, 1.8 g cm⁻³, 1.9 g cm⁻³, 2.0 g cm⁻³, 2.1 g cm⁻³, 2.2 g cm⁻³, and other typical but non-limiting densities. Therefore, the carbon matrix with such feature has low porosity and high density, which can improve the stability of the binary lithium-supplementing material and improve the stability of the lithium-supplementing effect. Since at least the surface carbon layer of the carbon matrix is the dense carbon layer, the entire carbon matrix may also a dense carbon layer, that is, the entire carbon matrix may be a dense carbon matrix.

In an embodiment, a material of the carbon matrix comprises at least one of a hard carbon and a soft carbon. The carbon matrix of this material has excellent electrical conductivity, and the formed carbon matrix has porosity and high density, which can effectively fix the binary lithium-supplementing additive in the above carbon matrix, and improve the stability of the binary lithium-supplementing additive and the stability of lithium supplement.

In a further embodiment, the carbon matrix material is also doped with a conductive agent. In embodiments, the weight content of the conductive agent in the binary lithium-supplementing additive is 10 wt. % - 30 wt. %, and may specifically be 10 wt. %, 15 wt. %, 20 wt. %, 25 wt. %, 30 wt. % and other typical but non-limiting weight contents. In a specific embodiment, the conductive agent comprises at least one of carbon nanotubes, graphene, and carbon nanofibers. Doping conductive agents such as carbon nanotubes in the carbon matrix can effectively improve the formation of a conductive network structure in the carbon matrix, improve the conductivity of the carbon matrix, and improve the conductivity and chemical properties of the binary lithium-supplementing additive. Carbon nanotubes is conducive to the uniform dispersion of the binary lithium-supplementing material, and helps to obtain highly dispersed binary lithium-supplementing material particles.

The binary lithium-supplementing material contained in the binary lithium-supplementing additive in embodiments of the present application has a molecular formula of LiₐX_{b}, in which, 1 ≤ a ≤ 3, 1 ≤ b ≤ 3, and X is any one selected from F, S, N, B, P, O, and Se. The binary lithium-supplementing material represented by the molecular formula of LiₐX_{b} is rich in lithium, so that the binary lithium-supplementing additive in embodiments of the present application can provide abundant lithium and therefore can be used as the "sacrifice agent" during the first cycle of charging. Based on the molecular formula LiₐX_{b} of the binary lithium-supplementing material, in an embodiment, the binary lithium-supplementing material comprises at least one of LiF, Li₂S, Li₃N, Li₃B, Li₃P, and Li₂Se. These binary lithium-supplementing materials have high lithium content and good stability.

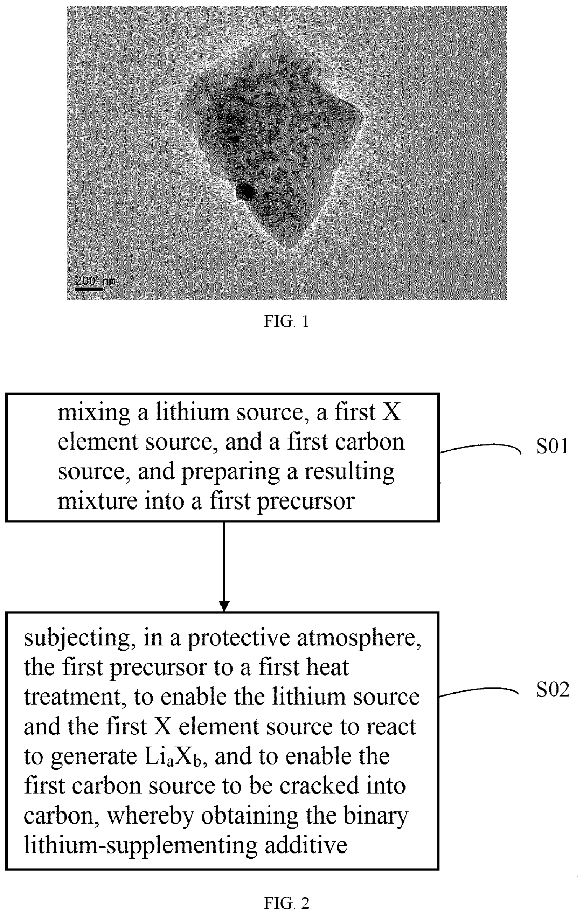

In embodiments, the binary lithium-supplementing material has a particle shape, that is, the binary lithium-supplementing material is embedded in the carbon matrix of above characteristic in the form of a particle, and the binary lithium-supplementing material and the carbon matrix form a pomegranate-like structure as shown in FIG. 1. In such condition, a morphology of the binary lithium-supplementing additive is a pomegranate-like structure. The pomegranate-like structure formed by the binary lithium-supplementing material and the carbon matrix is endowed to the binary lithium-supplementing additive of the embodiments of the present application. In the pomegranate-like structure, the particles of the binary lithium-supplementing material are small, and embedded in the carbon matrix, and the particles are separated by carbon, which avoids agglomeration and reduces the migration distance when Li⁺ is de-intercalated from the material. Most lithium-supplementing materials themselves have poor electronic conductivity, but in the pomegranate-like structure, the lithium-supplementing materials are surrounded by carbon with good electronic conductivity, which can improve the overall conductivity of the materials and reduce polarization. In addition, the particle size of the entire lithium-supplementing additive in the pomegranate-like structure is about 1 µm, which has better processing performance when mixed with cathode materials, etc., and avoids the problem of unstable viscosity of nanomaterial slurry.

In a specific embodiment, when the binary lithium-supplementing additive has a pomegranate-like structure, the particle size of the binary lithium-supplementing material in such structure is 20 nm - 100 nm, and may specifically be 20 nm, 25 nm, 30 nm, 40 nm, 50 nm, 65 nm, 70 nm, 75 nm, 80 nm, 90 nm, 100 nm and other typical but non-limiting particle sizes.

In each of the above embodiments, a weight content of the binary lithium-supplementing material accounts for 40 wt. % - 80 wt. % of the binary lithium-supplementing additive. By controlling and optimizing the content of the binary lithium-supplementing material, the lithium-supplementing effect of the binary lithium-supplementing material can be fully improved, so as to maintain the abundance of lithium ions in the battery system and improve the first charge-discharge efficiency and overall electrochemical performance of the battery.

In the above embodiments, the morphology of the binary lithium-supplementing additive can be controlled as needed, such as a particle morphology or other morphologies. In embodiments of the present application, particle morphology is relatively preferred. In addition, when being in the form of particles, the binary lithium-supplementing additive can be primary particles or secondary particles. When the morphology of the binary lithium-supplementing additive is particles, no matter whether the binary lithium-supplementing additive is primary particles or secondary particles, in embodiments, the particle size of the binary lithium-supplementing additive is 0.1 µm - 5 µm, and may specifically be 0.1 µm, 0.5 µm, 1 µm, 1.5 µm, 2 µm, 2.5 µm, 3 µm, 3.5 µm, 4 µm, 4.5 µm, 5 µm, and other typical but non-limiting particle sizes; in which, the particle size of the binary lithium-supplementing additive satisfies: D10/D5 ≥ 0.1, and D90/D50 ≤ 3. The inventor found in the research that when the D50 of the binary lithium-supplementing additive is less than 0.1 µm, with the decrease of the particle size, a specific surface area as well as the activity of the binary lithium-supplementing additive increases, resulting in reduced stability of the performance of the binary lithium-supplementing additive; and when the D50 of the binary lithium-supplementing additive is greater than 5 µm, as the particle size of the binary lithium-supplementing additive increases, the migration path of lithium ions increases accordingly, which increases the probability of dynamic polarization risk and reduces the capacity exertion effect. Therefore, the binary lithium-supplementing additive within such particle size range can enable the binary lithium-supplementing additive to fully exert the above functions such as lithium supplementation and high capacity, and improve its dispersibility.

After testing, the Raman spectrum analysis of the binary lithium-supplementing additives in the above embodiments shows that in the Raman spectrum of the binary lithium-supplementing additive, two scattering peaks are distributed at wavelengths of 1330 cm⁻¹ and 1580 cm⁻¹, respectively, intensities of the scattering peaks at the wavelengths of 1330 cm⁻¹ and 1580 cm⁻¹ are defined as I_{D} and I_{G}, respectively. In embodiments of the present application, I_{D} and I_{G} satisfy: I_{D}/I_{G} < 5.0. The binary lithium-supplementing additive has excellent conductivity, the binary lithium-supplementing additive has few channels on the surface layer, low porosity, and high density, and is not easy to absorb water during storage, making the binary lithium-supplementing additive have stable performance. The inventors further found that when I_{D}/I_{G} increases, such as greater than 5.0. The binary lithium-supplementing additive shows a decrease in conductivity, more pores on the surface, and the material is not easy to preserve, thus being easy to absorb water in an ordinary environment, resulting in a decrease in performance.

Correspondingly, embodiments of the present application further provide a preparation method of the above binary lithium-supplementing additive. In embodiments, the process flow of the preparation method of the binary lithium-supplementing additive is shown in FIG. 2, and the preparation method is conducted by the following steps:
S01: mixing a lithium source, a first X element source, and a first carbon source, and preparing a resulting mixture into a first precursor; and
S02: subjecting, in a protective atmosphere, the first precursor to a first heat treatment, to enable the lithium source and the first X element source to react to generate LiₐX_{b}, and to enable the first carbon source to be cracked into carbon, whereby obtaining the binary lithium-supplementing additive.

The lithium source and the first X element source in step S01 are collected, respectively, according to a stoichiometric ratio of elements in a molecular formula of LiₐX_{b}, in which, LiₐX_{b} is the binary lithium-supplementing material contained in the above binary lithium-supplementing additive. Therefore, a and b in LiₐX_{b} satisfy: 1 ≤ a ≤ 3, 1 ≤ b ≤ 3, and X is any one selected from F, S, N, B, P, O, and Se. Therefore, the stoichiometric ratio of elements in step S01 may be a molar ratio, or may be a weight ratio converted from a molar ratio. In an embodiment, the lithium source comprises at least one of LiOH and Li₂SO₄. The first X element source comprises at least one of LiOH and Li₂SO₄. When LiₐX_{b} is Li₂O and Li₂S, etc., the lithium source and the first X element source can be the same. For example, when LiₐX_{b} is Li₂O, the lithium source and the first X element source are combined into one, which is LiOH. These lithium source and first X element source can be effectively mixed uniformly after being mixed in proportion, and the cost of these raw materials is low, effectively reducing the cost of the binary lithium-supplementing material.

In embodiments, the mixing ratio of the first carbon source, the lithium source, and the first X element source satisfies that in the binary lithium-supplementing additive generated in step S02, the weight content of the binary lithium-supplementing material in the binary lithium-supplementing additive is 40 wt. % - 80 wt. %. In a specific embodiment, the first carbon source comprises at least one of resorcinol, a polyvinylpyrrolidone (PVP), a polyacrylonitrile (PAN), and a polystyrene (PS).

Further, during the mixing process of the first carbon source, the lithium source, and the first X element source, a conductive agent is also added. In embodiments, the addition amount of the conductive agent ensures that the weight content thereof accounts for 10 wt. % - 30 wt. % of the prepared binary lithium-supplementing additive, and may specifically be 10 wt. %, 15 wt. %, 20 wt. %, 25 wt. %, 30 wt. % and other typical but non-limiting weight content. In a specific embodiment, the conductive agent comprises at least one of carbon nanotubes, graphene, and carbon nanofibers.

Inventors found in their research that the particle sizes of components and the mixing uniformity of the different components in the first precursor have an impact on the carbon density and porosity generated by the first heat treatment in step S02, the smaller the particle sizes and the higher the mixing uniformity of the different components are, the higher the carbon density and the lower the porosity will be resulted after the first heat treatment in step S02. Therefore, the smaller particle sizes (such as in a nanometer range) of the lithium source and the first X element source are preferable. It is ideal to select soluble raw materials so that all the components can be dissolved and prepared into a mixed solution, so that all the components can be fully mixed uniformly, the carbon density generated by the first heat treatment in S02 can be increased and the porosity can be lowered.

In an embodiment, the method for preparing a precursor in step S01 comprises the following steps:
mixing the lithium source, the first X element source, the carbon source, and a solvent to form a mixture solution, granulating and drying the mixture solution to obtain the precursor in a particle shape.

When the above conductive agent is mixed in the precursor, the conductive agent according to the above ratio is further added in the mixing process. In addition, the granulation treatment and drying treatment of the mixture solution may be, but not limited to, spray drying treatment. The solution method is preferably spray-dried and granulated to improve the uniformity of dispersion of the components contained in the first precursor, thereby increasing the density of the carbon, that is, the carbon matrix, generated by the first heat treatment in step S02 and reducing the porosity.

The mixing treatment in step S01 is for the purpose of making the source materials uniformly mixed. Therefore, the mixing treatment can be a conventional mixing treatment, ideally a grinding treatment, which, on the premise of achieving uniform mixing of the source materials, can reduce the particle sizes of the source materials, and further improve the mixing uniformity of the source materials, thereby increasing the density of the carbon matrix generated by the first heat treatment in step S02, and reducing the porosity thereof, and in turn improving the stability in structure and electrochemical performance of the prepared binary lithium-supplementing additive.

In step S02, during the first heat treatment of the first precursor in step S01, the lithium source reacts with the first X element source to generate a binary lithium-supplementing material having the molecular formula represented by LiₐX_{b}, that is, the above binary lithium-supplementing material contained in the above binary lithium-supplementing additive. Specifically, when both the lithium source and the first X element source are LiOH and Li₂SO₄, during the first heat treatment, LiOH is decomposed to generate Li₂O, and Li₂SO₄ is decomposed to generate Li₂S and O₂.

In the first heat treatment process, the lithium source reacts with the first X element source to generate the binary lithium-supplementing material having the molecular formula represented by LiₐX_{b}, and at the same time, the first carbon source is cracked to generate the carbon matrix contained in the above binary lithium-supplementing additive, specifically, to generate the carbon matrix in which at least the surface carbon layer is a dense carbon layer, thereby forming the above binary lithium-supplementing additive.

In an embodiment, conditions for the first heat treatment are as follows: temperature is 650°C - 900°C, specifically, such as but not limited to 650°C, 700°C, 750°C, 800°C, 850°C, 900°C and other typical but non-limiting temperatures. At such temperature, the duration for the first heat treatment should be sufficient, for example, 2 hrs - 4 hrs.

The binary lithium-supplementing additive produced after the above first heat treatment may be primary particles or secondary particles.

In addition, the protective atmosphere in the first heat treatment in step S02 should be an environment that ensures the cracking of the carbon source, such as a non-oxygen environment. In a specific embodiment, the protective atmosphere is an atmosphere protected by argon.

In order to make the carbon matrix contained in the prepared binary lithium-supplementing additive have at least a dense carbon layer, in an embodiment, after step S02, a carbon layer can be further deposited on the surface of the binary lithium-supplementing additive. Or alternatively, the binary lithium-supplementing additive is submerged into a molten carbon source or a carbon source solution for impregnation treatment, which is followed with carbonization, in this way, at least the carbon density at the surface carbon layer of the carbon matrix contained in the binary lithium-supplementing additive can be improved, that is, at least porosity of the surface carbon layer in the carbon matrix can be reduced, such as controlling the porosity at the range of 0.1% - 1% as described in the above.

Therefore, by using the above preparation method of the binary lithium-supplementing additive in embodiments of the present application, the raw materials of the elements contained in the binary lithium-supplementing material represented by LiₐX_{b} can be mixed with the carbon source, and performed with the heat treatment to obtain the above binary lithium-supplementing additive, making the prepared binary lithium-supplementing additive have the excellent lithium-supplementing effect and electrochemical performance as mentioned above. Moreover, it can be effectively ensured that the prepared binary lithium-supplementing additive is rich in lithium and has high purity, and the prepared binary lithium-supplementing additive has high capacity and lithium-supplementing effect as well as excellent storage stability and processing stability. In addition, the preparation method of the binary lithium-supplementing additive can ensure that the prepared binary lithium-supplementing additive has stable structure and electrochemical performance, and has high efficiency and saves production costs.

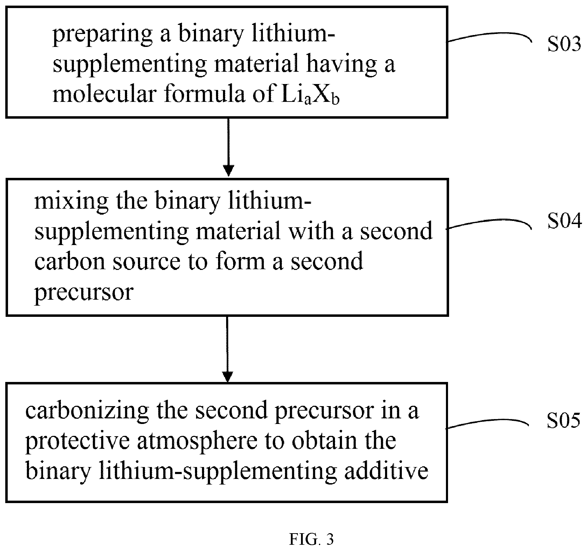

In embodiments, the process flow of the preparation method of the binary lithium-supplementing additive is shown in FIG. 3, and the preparation method comprises the following steps:
S03: preparing a binary lithium-supplementing material having a molecular formula of LiₐX_{b};
S04: mixing the binary lithium-supplementing material with a second carbon source to form a second precursor; and
S05: carbonizing the second precursor in a protective atmosphere to obtain the binary lithium-supplementing additive.

The molecular formula LiₐX_{b} of the binary lithium-supplementing material in step S03 is the above LiₐX_{b} of the binary lithium-supplementing material, therefore, in LiₐX_{b}, 1 ≤ a ≤ 3, 1 ≤ b ≤ 3, and X is any one selected from F, S, N, B, P, O, and Se.

In an embodiment, the method for preparing a binary lithium-supplementing material having a molecular formula of LiₐX_{b} in step S03 comprises the following steps:
Step S031: mixing a second X element source of the molecular formula LiₐX_{b} and a lithium element to form a precursor of the binary lithium-supplementing material; and
Step S032: subjecting the precursor of the binary lithium-supplementing material to a second heat treatment to perform a substitution reaction, whereby generating the binary lithium-supplementing material having the molecular formula of LiₐX_{b}.

The second X element source in step S031 comprises at least one of Fe₃O₄, NiO, Mn₃O₄, CoS₂, and CoF₃. These second X element sources provide X element, and can undergo substitution reaction with lithium element in the second heat treatment process to generate LiₐX_{b}. For example, when the second X element source is Fe₃O₄, NiO, Mn₃O₄ and other oxides, Fe₃O₄, NiO, Mn₃O₄ and other oxides undergo substitution reactions with lithium to generate LizO. When the second X element source is CoS₂, CoS₂ undergoes substitution reaction with lithium to generate Li₂S. When the second X element source is CoF₃, CoF₃ undergoes substitution reaction with lithium to generate LiF.

CoS₂ + 4 Li → Co + 2 Li₂S; CoF₃ + 3 Li → Co + 3 LiF

In an embodiment, the temperature of the second heat treatment is 190°C - 250°C, and can specifically be 190°C, 200°C, 210°C, 220°C, 230°C, 240°C, 250°C, and other typical but non-limiting temperature, at which temperature it is ensured that the substitution reaction between the second X element source and the lithium element can effectively occur, and improves the efficiency of the substitution reaction. At such temperature, the duration for the first heat treatment should be sufficient, for example, 2 hrs - 4 hrs.

In addition, the second heat treatment should be performed in a protective atmosphere, such as a non-oxygen environment or a vacuum environment. In a specific embodiment, the protective atmosphere is an argon-protected atmosphere. The binary lithium-supplementing material produced after the second heat treatment can be primary particles or secondary particles.

In addition, in order to increase the density of the carbon generated by the carbonization treatment in step S05, that is, the carbon matrix, and reduce the porosity thereof, the particle size of the binary lithium-supplementing material prepared in step S01 should be controlled to the greatest extent, such as controlling the particle size of the binary lithium-supplementing material in a range of nanometers, specifically 20 nm - 100 nm.

In step S04, the mixing ratio of the second carbon source and the binary lithium-supplementing material prepared in step S01 satisfies that a weight content of the binary lithium-supplementing material in the binary lithium-supplementing additive generated by carbonization treatment in step S05 is 40 wt. % - 80 wt. %, and may specifically be 40%, 50%, 60%, 70%, 80% and other typical but non-limiting weight contents. In a specific embodiment, the second carbon source comprises at least one of a phenolic resin, a polyvinylpyrrolidone (PVP), a polyacrylonitrile (PAN), and a polystyrene (PS).

Further, during the mixing process of the binary lithium-supplementing material and the second carbon source, a conductive agent is further added. In embodiments, the addition amount of the conductive agent ensures that the weight content thereof accounts for 10 wt. % - 30 wt. % of the binary lithium-supplementing additive prepared in step S05. In a specific embodiment, the conductive agent comprises at least one of carbon nanotubes, graphene, and carbon nanofibers. Ideally, the particle size of the conductive agent can also be in the nanometer range, and can specifically be 20 nm - 100 nm, specifically 20 nm, 30 nm, 40 nm, 50 nm, 60 nm, 70 nm, 80 nm, 90 nm, 100 nm, and other typical but non-limiting particle sizes, so as to increase the density of the carbon generated in the carbonization treatment in step S05, that is, the carbon matrix, and reduce the porosity thereof.

The mixing treatment in step S04 is to make the binary lithium-supplementing material and the second carbon source uniformly mixed. Therefore, the mixing treatment can be a conventional mixing treatment, ideally a grinding treatment, which, on the premise of achieving uniform mixing of the source materials, can reduce the particle sizes of the source materials, and further improve the mixing uniformity of the source materials, thereby increasing the density of the carbon matrix generated by the first heat treatment in step S05, and reducing the porosity thereof, and in turn improving the stability in structure and electrochemical performance of the prepared binary lithium-supplementing additive. In order to reduce the particle size of the second precursor and improve the uniform dispersion of the components contained in the second precursor, in embodiments, the solution method is used in step S04, preferably spray drying granulation is used to improve the dispersion uniformity and reduce particle sizes of the components contained in the second precursor, thereby increasing the density of the carbon generated in the carbonization treatment in step S05, that is, the carbon matrix, and reducing the porosity thereof.

In step S05, during the carbonization process of the second precursor in step S04, the second carbon source is cracked to generate the carbon matrix contained in the above binary lithium-supplementing additive, specifically the dense carbon matrix, thereby forming the above binary lithium-supplementing additive.

In an embodiment, the conditions of the carbonization treatment are as follows: a temperature is 500°C - 900°C, and may specifically be 500°C, 600°C, 700°C, 800°C, 900°C, and other typical but non-limiting temperatures. At such temperature, the carbonization treatment should be sufficient, such as 3 hrs and 5 hrs.

In order to make the carbon matrix contained in the prepared binary lithium-supplementing additive have at least a dense carbon layer, in an embodiment, after the treatment in step S04, the second precursor can also be submerged into a molten carbon source or a carbon source solution for impregnation treatment, which is followed with carbonization in step S05.

Or alternatively, the binary lithium-supplementing additive after the carbonization treatment in step S05 can be submerged into the molten carbon source or the carbon source solution for further impregnation treatment, and then perform a secondary carbonization treatment, in this way, at least the carbon density at the surface carbon layer of the carbon matrix contained in the binary lithium-supplementing additive can be improved, that is, at least porosity of the surface carbon layer in the carbon matrix can be reduced, such as controlling the porosity at the range of 0.1% - 1% as described in the above.

The binary lithium-supplementing additive produced after the above carbonization treatment can be primary particles or secondary particles.

In addition, the protective atmosphere of the carbonization treatment in step S05 should be an environment that ensures the cracking of the carbon source, such as a non-oxygen environment. In a specific embodiment, the protective atmosphere is an atmosphere protected by argon.

Therefore, by using the above preparation method of the binary lithium-supplementing additive in embodiments of the present application, the elements contained in the binary lithium-supplementing material represented by LiₐX_{b} can be directly mixed with the carbon source, and performed with the heat treatment to obtain the above binary lithium-supplementing additive, making the prepared binary lithium-supplementing additive have the excellent lithium-supplementing effect and electrochemical performance as mentioned above. Moreover, it can be effectively ensured that the prepared binary lithium-supplementing additive is rich in lithium and has high purity, and the prepared binary lithium-supplementing additive has high capacity and lithium-supplementing effect as well as excellent storage stability and processing stability. In addition, the preparation method of the binary lithium-supplementing additive can ensure that the prepared binary lithium-supplementing additive has stable structure and electrochemical performance, and has high efficiency and saves production costs.

In another aspect, embodiments of the present application provide a cathode lithium-supplementing additive. The cathode lithium-supplementing additive in embodiments of the present application comprises the binary lithium-supplementing additive as described in the above embodiments of the present application. The cathode lithium-supplementing additive can be the binary lithium-supplementing additive as described in the above embodiments of the present application, and certainly can further comprise other additives suitable for the cathode, or auxiliary additives which are beneficial to give full play to the binary lithium-supplementing additive as described in the above embodiments of the present application. When other additives are contained, the ratio between the binary lithium-supplementing additive and the additive can be adjusted according to the needs of practical applications. Since the cathode lithium-supplementing additive of the present application contain the binary lithium-supplementing additive of the present application, during the charging and discharging process, the cathode lithium-supplementing additive and the cathode material can be used as a lithium source and as a "sacrifice agent" during the first cycle of charging to replenish the irreversible lithium ions consumed by the formation of the SEI film on the anode, so as to maintain the abundance of lithium ions in the battery system and improve the first charge-discharge efficiency and overall electrochemical performance of the battery.

In yet another aspect, embodiments of the present application provide a cathode material. The cathode material in embodiments of the present application comprises a lithium-supplementing additive. The lithium-supplementing additive is the binary lithium-supplementing additive of the above embodiments of the present application or the cathode lithium-supplementing additive of the above embodiments of the present application. Certainly, the cathode material may also comprise cathode materials in the field of lithium-ion batteries. Since the cathode material of the present application contain the binary lithium-supplementing additive of the present application, during the charging and discharging process, the cathode lithium-supplementing additive and the cathode material can be used as a lithium source and as a "sacrifice agent" during the first cycle of charging to replenish the irreversible lithium ions consumed by the formation of the SEI film on the anode, so as to maintain the abundance of lithium ions in the battery system and improve the first charge-discharge efficiency and overall electrochemical performance of the battery.

In embodiments, the content of the binary lithium-supplementing additive in the above embodiments of the present accounts for 0.1 wt. % - 10 wt. % of the cathode material, and can specifically be 0.1 wt. %, 1 wt. %, 2 wt. %, 3 wt. %, 5 wt. %, 6 wt. %, 7 wt. %, 8 wt. %, 9 wt. %, 10 wt. %, and other typical but non-limiting contents. By controlling and optimizing the content of the binary lithium-supplementing additive in the cathode material, which can facilitate the binary lithium-supplementing additive to fully exert its functions as described in the above.

Meanwhile, based on the cathode material provided by the embodiments of the present application, embodiments of the present application further provide a cathode and a lithium battery containing the cathode according to embodiments of the present application.

The active material contained in the cathode is the above cathode material in embodiments of the present application. The cathode can be a conventional cathode of a lithium battery, such as a current collector and a cathode active layer bonded to the surface of the current collector.

The cathode current collector comprises but not only any one of copper foil and aluminum foil.

The cathode active layer contains the cathode material of the above embodiments of the present application, that is, contains the lithium-supplementing additive, specifically contains the binary lithium-supplementing additive according to the above-described embodiments of the present application or the cathode lithium-supplementing additive according to the above-described embodiments of the present application. In embodiments, the lithium-supplementing additive is the binary lithium-supplementing additive in the above embodiments of the present application, or alternatively, the weight content of the cathode lithium-supplementing additive in the above embodiments of the present application accounts for 0.1 wt. % - 10 wt. % of the cathode active layer; and the content my specifically be 0.1 wt. %, 0.2 wt. %, 0.3 wt. %, 0.4 wt. %, 0.5 wt. %, 1 wt. %, 2 wt. %, 3 wt. %, 4 wt. %, 5 wt. %, 6 wt. %, 7 wt. %, 8 wt. %, 9 wt. %, 10 wt. %, or other typical but non-limiting content, preferably 2 wt. % - 3 wt. %.

The cathode active layer comprises a cathode active material, a binder and a conductive agent in addition to the lithium-supplementing additive.

In an embodiment, the cathode active material comprises at least one of lithium cobalt oxide, lithium iron phosphate, lithium manganese iron phosphate, lithium manganate, lithium nickel cobalt manganate, and lithium nickel manganese oxide.

In an embodiment, the content of the binder in the cathode active layer is 3 wt. % - 5 wt. %, specifically 3 wt. %, 3.5 wt. %, 4 wt. %, 4.5 wt. %, 5 wt. %, and other typical but non-limiting content. In a specific embodiment, the binder comprises one or more of a polyvinylidene chloride, a soluble polytetrafluoroethylene, a styrene-butadiene rubber, a hydroxypropyl methyl cellulose, a methyl cellulose, a carboxymethyl cellulose, a polyvinyl alcohol, an acrylonitrile copolymer, a sodium alginate, a chitosan, and a chitosan derivative.

In an embodiment, the content of the conductive agent in the cathode active layer is 2 wt. % - 4 wt. %, specifically 2 wt. %, 2.5 wt. %, 3 wt. %, 3.5 wt. %, 4 wt. %, and other typical but non-limiting contents. In a specific embodiment, the conductive agent comprises one or more of a graphite, a carbon black, an acetylene black, a graphene, a carbon fiber, a C60, and a carbon nanotube.

In embodiments, the preparation process of the cathode is as follows: the cathode active material, the lithium-supplementing additive, the conductive agent, and the binder are mixed to obtain an electrode slurry, the electrode slurry is applied on the current collector, which are then performed with drying, rolling, die-cut, and other steps to prepare the cathode sheet.

In such condition, the lithium battery of the embodiments of the present application contains the above cathode. Certainly, the lithium battery of the embodiment of the present application also has necessary components such as a anode, a separator, and an electrolyte necessary for a lithium battery.

In addition, the lithium battery in embodiments of the present application may be a lithium ion battery or a lithium metal battery.

Since the cathode contains the above binary lithium-supplementing additive or the cathode lithium-supplementing additive, during the first cycle of charging of the lithium battery of the embodiments of the present application, the cathode contains the above lithium-supplementing additive as a "sacrifice agent", which release all the lithium ions at one time as much as possible to supplement the irreversible lithium ions consumed by the formation of the SEI film on the anode, so as to maintain the abundance of lithium in the lithium battery system of the embodiments of the present application and improve the overall electrochemical performances of the lithium battery of the embodiments of the application, such as the first charge-discharge efficiency, the capacity, and the cycle performance.

In the following, a number of specific examples are used to illustrate the binary lithium-supplementing additive of the present application, its preparation method and application, and the like.

### 1. Binary lithium-supplementing additive and preparation method thereof

### Example A1

This example provides a binary lithium-supplementing additive and a preparation method thereof. The binary lithium-supplementing additive comprises a dense carbon matrix and Li₂O distributed and embedded in the dense carbon matrix, and Li₂O and the dense carbon matrix form a pomegranate-like structure.

The preparation method of the binary lithium-supplementing additive of this example was conducted by the following steps:
S1. Preparation of Li₂O: under the protection of Ar atmosphere, an appropriate amount of Co₃O₄ was mixed with metal Li, and heated to a temperature of 190°C - 250°C for reaction, and the reaction time was controlled 2 hrs - 4 hrs, and continuous mechanical stirring was carried out during the reaction to ensure uniform mixing of the reactants. Li was able to substitute Co in the Co₃O₄ to generate the Co element, and the obtained Li₂O nanoparticles were embedded in the Co matrix. The reaction equation is: 8 Li + Co₃O₄ → 3Co + 4 Li₂O;
S2. Preparation of a binary lithium-supplementing additive of a pomegranate-like structure:

Li₂O/Co and carbon source were uniformly mixed in solid phases, and then carbonization treatment were performed at a temperature of 500°C - 700°C for 2 hrs - 4 hrs.

The binary lithium-supplementing additive of this example was analyzed by transmission electron microscope (TEM), and a TEM image thereof was shown in FIG. 1. It can be seen from FIG. 1 that Li₂O was dispersed in particle shape and embedded in a dense carbon matrix (the black dots in FIG. 1 are also Li₂O particles), forming a pomegranate-like structure.

After testing, the density of the carbon matrix contained in the binary lithium-supplementing additive of this example was 1.7 g cm⁻³ - 1.9 g cm⁻³, the porosity was 0.3% - 0.5%, the content of Li₂O was 50 wt. % - 70 wt. %, and the particle size of Li₂O was 30 nm - 60 nm, and the D50 of the binary lithium-supplementing E additive was 0.9 µm.

### Example A2

This example provides a binary lithium-supplementing additive and a preparation method thereof. The binary lithium-supplementing additive comprises a dense carbon matrix and Li₂O distributed and embedded in the dense carbon matrix, and Li₂O and the dense carbon matrix form a pomegranate-like structure.

The preparation method of the binary lithium-supplementing additive of this example was conducted by the following steps:
S1: LiOH, resorcinol, an ammonia water, a formalin solution, and a carbon nanotube dispersion liquid were added to water according to a weight ratio of LiOH, resorcinol, and carbon nanotubes of 1:2:1 and according to a volume ratio of the ammonia water, the formalin solution, and water of 1:1.5:100, a resulting mixture was stirred for several hours, and then spray-dried, to obtain microstructured spherical binary lithium-supplementing additive precursor particles;
S2: The spherical binary lithium-supplementing additive precursor particles were placed in a tube furnace and reacted at a temperature of about 1000°C for 2 hrs - 4 hrs under an argon atmosphere, during which, LiOH was decomposed into Li₂O, and the resorcinol resin was carbonized at high temperature to obtain a binary lithium-supplementing additive having a pomegranate-like structure.

The binary lithium-supplementing additive of this example was analyzed by TEM, and the TEM image was similar to that shown in FIG. 1. Li₂O was dispersed in particle shape and embedded in a dense carbon matrix, forming a pomegranate morphology.

After testing, the density of the carbon matrix contained in the binary lithium-supplementing additive of this example was 1.9 g cm⁻³, the porosity was 0.2% - 0.4%, the content of Li₂O was 40 wt. % and 60 wt. %, and the particle size of Li₂O was 10 nm - 40 nm, the D50 of the binary lithium-supplementing additive was 0.4 µm.

### Example A3

This example provides a binary lithium-supplementing additive and a preparation method thereof. The binary lithium-supplementing additive comprises a dense carbon matrix and Li₂O distributed and embedded in the dense carbon matrix, and Li₂O and the dense carbon matrix form a pomegranate-like structure.

The preparation method of the binary lithium-supplementing additive of this example was conducted by the following steps:
S1. Preparation of Li₂S: Under the protection of Ar atmosphere, an appropriate amount of CoS₂ was mixed with metal Li, and heated to a temperature of 185°C - 220°C for reaction, and the reaction time was controlled 1 hr - 4 hrs, and continuous mechanical stirring was carried out during the reaction to ensure uniform mixing of the reactants. Li was able to substitute Co in the CoS₂ to generate the Co element, and the obtained Li₂S nanoparticles were embedded in the Co matrix. The reaction equation is: 4 Li + CoS₂ → Co + 2 Li₂S;
S2. Preparation of a binary lithium-supplementing additive of a pomegranate-like structure:

Li₂S/Co and carbon source were uniformly mixed, and then carbonization treatment were performed at a temperature of 500°C - 700°C for 2 hrs - 4 hrs.

The binary lithium-supplementing additive of this example was analyzed by transmission electron microscope (TEM), and a TEM image thereof was shown in FIG. 1. It can be seen from FIG. 1 that Li₂S was dispersed in particle shape and embedded in a dense carbon matrix (the black dots in FIG. 1 are also Li₂S particles), forming a pomegranate-like structure.

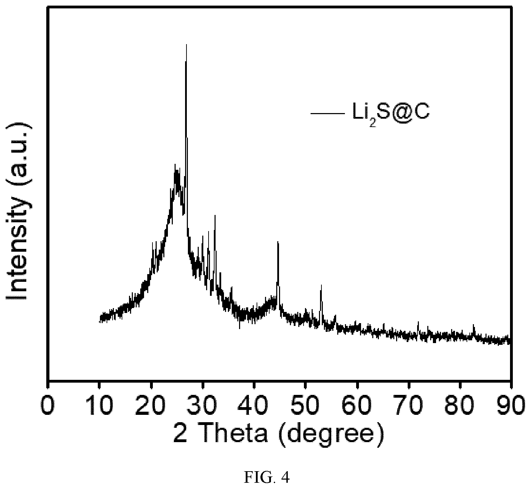

The binary lithium-supplementing additive prepared in this example was analyzed by X-ray diffraction (XRD), and its XRD pattern was shown in FIG. 4. It can be seen from FIG. 4 that the Li₂S@C related characteristic peaks are comprised, and the binary lithium-supplementing additive in this example is the Li₂S@C binary lithium-supplementing additive containing Li₂S.

After testing, the density of the carbon matrix contained in the binary lithium-supplementing additive of this example was 1.7 g cm⁻³ - 1.9 g cm⁻³, the porosity was 0.2% - 1%, the content of Li₂S was 50 wt. % - 70 wt. %, and the particle size of Li₂S was 5 nm - 30 nm, and the D50 of the binary lithium-supplementing additive was 1 µm .

### Comparative Example A1

Li₂O binary lithium-supplementing material was provided.

### Comparative Example A2

This comparative example provides a binary lithium-supplementing additive. Compared with Example A2, the difference lies in that the carbon matrix was a carbon matrix having a porous structure.

The preparation method of the binary lithium-supplementing additive of this example was conducted by the following steps:

Metal lithium was melted under vacuum conditions, mixed with a porous carbon material, and the molten lithium was infiltrated into the pores of the porous carbon material at a temperature of 180°C - 500°C; after the reaction was completed, O₂ was introduced at a rate of 0.5 m³/min - 1.5 m³/min to react for 5 min - 60 min, and after the reaction, resulting products were cooled under a protective atmosphere to obtain a cathode lithium-supplementing additive.

### 2. Lithium ion battery example:

The binary lithium-supplementing additive provided in the above Example A1 to Example A3 and the binary lithium-supplementing additive provided by Comparative Example A1 to Comparative Example A2 were respectively prepared into cathodes and assembled lithium-ion batteries according to the following methods:
cathode: the lithium-supplementing additive was mixed with lithium cobaltate at a weight ratio of 5:95 to obtain a mixture, the mixture, a polyvinylidene fluoride, and SP-Li were mixed and ball milled at a weight ratio of 93:3:4 to obtain a cathode slurry, which was then applied onto a surface of an aluminum foil, after that a resulting aluminum foil was rolled, and vacuum dried at a temperature of 110°C overnight to obtain the cathode sheet;
anode: lithium metal sheet;
electrolyte: ethylene carbonate and ethyl methyl carbonate were mixed at a volume ratio of 3:7, and LiPF6 was added to form an electrolyte, in which, a concentration of LiPF6 was 1 mol/L;
separator: polypropylene microporous separator; and
lithium-ion battery assembly: the lithium-ion battery was assembled in a glove box in an inert atmosphere according to the assembly sequence of lithium metal sheet-separator-electrolyte-cathode sheet.

### Related performance test

### Electrochemical performances of lithium-ion batteries:

Lithium secondary batteries containing binary lithium-supplementing additive prepared in Examples A1-A3 and binary lithium-supplementing additive prepared in Comparative Examples A1-A2 were performed with electrochemical performance tests under the following test conditions: a voltage range was 4.2 V vs - 3.0 V vs. Li⁺/Li, and a current density was 0.1 C.

The relevant electrochemical performance test results of lithium secondary batteries were shown in Table 1 below:

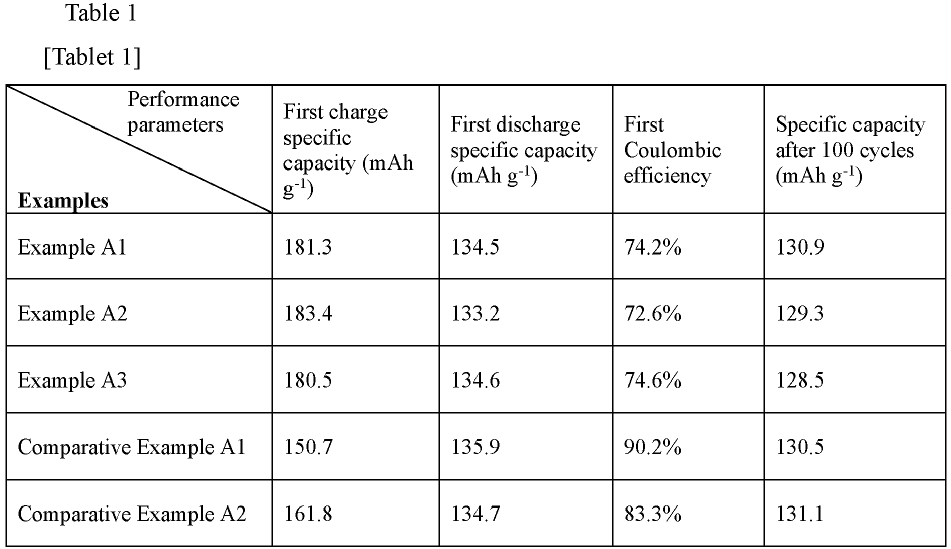

As can be seen from Table 1, compared with comparative examples A1 and A2, the first-time charging specific capacity of the examples A1-A3 has been greatly improved, and the corresponding initial Coulombic efficiency is also lower, which shows that the lithium-supplementing additive can release more lithium ions when it is charged for the first time, so as to supplement the irreversible capacity loss of the anode for the first cycle, and consume as little lithium ions as possible in the cathode material itself. The excellent performance of the examples comes from the unique structural design of the corresponding lithium-supplementing materials. The dense carbon matrix in the pomegranate-like structure can inhibit particle agglomeration and growth, and has good electronic contact with the lithium-supplementing particles, thereby reducing polarization and being conducive to de-intercalation of lithium ions.

The above descriptions are only preferred embodiments of the application, and are not intended to limit the application. Any modifications, equivalent replacements, and improvements made within the spirit and principles of the application should be included within the protection scope of the present application.

## Claims

1. A binary lithium-supplementing additive, comprising: a carbon matrix and a binary lithium-supplementing material dispersed in the carbon matrix,
wherein
at least a carbon layer on a surface of the carbon matrix is a dense carbon layer, and
the binary lithium-supplementing material has a molecular formula of LiₐX_{b}, wherein, 1 ≤ a ≤ 3, 1 ≤ b ≤ 3, and X is any one selected from F, S, N, B, P, O, and Se.

2. The binary lithium-supplementing additive according to claim 1, wherein at least the carbon layer on the surface of the carbon matrix has a porosity of 0.1% - 1%; and/or
a material of the carbon matrix comprises at least one of a hard carbon and a soft carbon; and/or
a weight content of the binary lithium-supplementing material accounts for 40 wt. % - 80 wt. % of the binary lithium-supplementing additive; and/or
the binary lithium-supplementing material comprises at least one of LiF, Li₂S, Li₃N, Li₃B, Li₂O, Li₃P, and Li₂Se; and/or
the binary lithium-supplementing additive has a particle size of 0.1 µm - 5 µm; and/or
the particle size of the binary lithium-supplementing additive satisfies: D10/D5 ≥ 0.1, and D90/D50 ≤ 3.

3. The binary lithium-supplementing additive according to any one of claims 1-2, wherein the binary lithium-supplementing material has a particle shape, and the binary lithium-supplementing material and the carbon matrix form a pomegranate-like structure; and/or
the material of the carbon matrix is further doped with at least one conductive agent selected from carbon nanotubes, graphene, and carbon nanofibers.

4. The binary lithium-supplementing additive according to claim 3, wherein in the pomegranate-like structure, the particle size of the binary lithium-supplementing material is 20 nm - 100 nm.

5. The binary lithium-supplementing additive according to any one of claims 1-2 and 4, wherein
in a Raman spectrum of the binary lithium-supplementing additive, two scattering peaks are distributed at wavelengths of 1330 cm⁻¹ and 1580 cm⁻¹, respectively, intensities of the scattering peaks at the wavelengths of 1330 cm⁻¹ and 1580 cm⁻¹ are defined as I_{D} and I_{G}, respectively, and I_{D} and I_{G} satisfy: I_{D}/I_{G} < 5.0; and/or
an overall electronic conductivity of the binary lithium-supplementing additive is 10⁻⁵ S cm⁻¹- 10⁻² S cm⁻¹.

6. A preparation method of a binary lithium-supplementing additive, comprising steps of:
mixing a lithium source, a first X element source, and a first carbon source, and preparing a resulting mixture into a first precursor;
wherein, the lithium source and the first X element source are collected, respectively, according to a stoichiometric ratio of elements in a molecular formula of LiₐX_{b}, wherein, a and b in LiₐX_{b} satisfy: 1 ≤ a ≤ 3, 1 ≤ b ≤ 3, and X is any one selected from F, S, N, B, P, O, and Se; and
subjecting, in a protective atmosphere, the first precursor to a first heat treatment, to enable the lithium source and the first X element source to react to generate LiₐX_{b}, and to enable the first carbon source to be cracked into carbon, whereby obtaining the binary lithium-supplementing additive.

7. The preparation method according to claim 6, wherein
the lithium source comprises at least one of LiOH and Li₂SO₄; and/or
the first X element source comprises at least one of LiOH and Li₂SO₄; and/or
the first carbon source comprises at least one of resorcinol, a polyvinylpyrrolidone, a polyacrylonitrile, a polystyrene; and/or
in the step of mixing the lithium source, the first X element source, and the first carbon source, a conductive agent is further added to participate in the mixing step; and/or
a temperature of the first heat treatment is 650°C - 900°C; and/or
preparation of the precursor comprises steps of:
mixing the lithium source, the first X element source, the carbon source, and a solvent to form a mixture solution, granulating and drying the mixture solution to obtain the precursor in a particle shape.

8. The preparation method according to claim 7, wherein in case that LiₐX_{b} is Li₂O or Li₂S, the lithium source and/or the X element source comprises at least one of LiOH and Li₂SO₄.

9. A preparation method of a binary lithium-supplementing additive, comprising steps of:
preparing a binary lithium-supplementing material having a molecular formula of LiₐX_{b};
wherein, a and b in LiₐX_{b} satisfy: 1 ≤ a ≤ 3, 1 ≤ b ≤ 3, and X is any one selected from F, S, N, B, P, O, and Se;
mixing the binary lithium-supplementing material with a second carbon source to form a second precursor; and
carbonizing the second precursor in a protective atmosphere to obtain the binary lithium-supplementing additive.

10. The preparation method according to claim 9, wherein
a temperature of the carbonizing step is 500°C - 900°C; and/or
the second carbon source comprises at least one of a phenolic resin, a polyvinylpyrrolidone, a polyacrylonitrile, and a polystyrene; and/or
the step of preparing the binary lithium-supplementing material having the molecular formula of LiₐX_{b} comprises steps of:
mixing a second X element source of the molecular formula LiₐX_{b} and a lithium element to form a precursor of the binary lithium-supplementing material; and
subjecting the precursor of the binary lithium-supplementing material to a second heat treatment in a protective atmosphere, to perform a substitution reaction, whereby generating the binary lithium-supplementing material having the molecular formula of LiₐX_{b}.

11. The preparation method according to claim 10, wherein
the second X element source comprises at least one of Fe₃O₄, NiO, Mn₃O₄, and Co₃O₄; and/or
a temperature of the second heat treatment is 190°C - 250°C.

12. A cathode lithium-supplementing additive, comprising:
the binary lithium-supplementing additive according to any one of claims 1-5, or
the binary lithium-supplementing additive prepared according to the preparation method according to any one of claims 6-8 or according to the preparation method according to any one of claims 9-11.

13. A cathode material, comprising:
the binary lithium-supplementing additive according to any one of claims 1-5, or
the binary lithium-supplementing additive prepared according to the preparation method according to any one of claims 6-8 or according to the preparation method according to any one of claims 9-11, or
the cathode lithium-supplementing additive according to claim 12.

14. A cathode, comprising: a current collector and a cathode active layer combined on a surface of the current collector, wherein
the cathode active layer comprises a cathode active material, a lithium-supplementing additive, a binder, and a conductive agent;
wherein the lithium-supplementing additive comprises:
the binary lithium-supplementing additive according to any one of claims 1-5, or
the binary lithium-supplementing additive prepared according to the preparation method according to any one of claims 6-8 or according to the preparation method according to any one of claims 9-11, or
the cathode lithium-supplementing additive according to claim 12.

15. The cathode according to claim 14, wherein
a content of the lithium-supplementing additive accounts for 0.1 wt. % - 10 wt. % of the cathode active layer; and/or
a content of the conductive agent accounts for 2 wt. % - 4 wt. % of the cathode active layer; and/or
a content of the binder accounts for 3 wt. % - 5 wt. % of the cathode active layer.

16. A lithium battery, comprising a cathode, wherein the cathode is the cathode according to any one of claims 14-15.
